# EUROPÄISCHE PATENTSCHRIFT

(11) **EP 0 868 375 B1**
(45) Veröffentlichungstag und Bekanntmachung des Hinweises auf die Patenterteilung: **25.08.1999**
(21) Anmeldenummer: 96942172.6
(22) Anmeldetag: 18.12.1996
(51) Int. Cl.: B65G 1/08, B65G 47/10, B65G 1/137, B65G 47/49

(54) **KOMMISSIONIERANLAGE**
COMMISSIONING INSTALLATION
SYSTEME DE PREPARATION DE COMMANDES

(30) Priorität: 21.12.1995 AT 70695
(43) Veröffentlichungstag der Anmeldung: 07.10.1998
(73) Patentinhaber: KNAPP HOLDING GmbH, 8075 Hart bei Graz (AT)
(72) Erfinder: WÜNSCHER, Eduard, A-8075 Hart bei Graz (AT); FREUDELSPERGER, Karl, A-8075 Hart bei Graz (AT)
(74) Vertreter: Weinzinger, Arnulf, Dipl.-Ing.
(86) Internationale Anmeldenummer: AT9600251
(87) Internationale Veröffentlichungsnummer: WO9723394

(56) Entgegenhaltungen:
- EP-A- 0 457 158
- EP-A- 0 710 611
- DE-A- 2 940 819
- DE-A- 3 915 139
- FR-A- 1 525 135
- US-A- 4 527 937

## Beschreibung

Die Erfindung betrifft eine Kommissionieranlage zur automatischen rechnergesteuerten Zuführung von Artikeln, z.B. Tabakwaren, von einem Speicherbereich zu einer Übergabestation gemäß Kommissionieraufträgen und ohne Verwendung von Kommsissionierbehältern, gemäß dem einleitenden Teil von Anspruch 1. Eine solche Kommissionieranlage mit Stapel-Durchlauferspeichereinheiten ist in der DE 195 11 364 A1 geoffenbart.

Beispielsweise aus der AT 391 671 B (der die DE 32 13 119 A bzw. die GB 21 18 156 A entspricht), aber auch aus der DE 22 26 769 A, der DE 27 36 197 A, dem DE 84 32 067 U oder auch der FR 21 85 557 A sind rechnergesteuerte, automatische Kommissionieranlagen bekannt, bei denen - ebenso wie im Prinzip bei der Kommissionieranlage gemäß DE 195 11 364 A1 - aus Speicherfächern, die regalartig angeordnet sind und die zu kommissionierenden Artikel oder Stückgüter enthalten, unter Rechnersteuerung je nach Kommissionierauftrag Artikel auf ein an ihnen vorbeilaufendes Förderband ausgeworfen werden. Das Förderband seinerseits führt die kommissionierten Artikel pro Kommissionierauftrag gesammelt der Verpackung, gegebenenfalls in einem Kommissionierbehälter, zu. Dabei erfolgt die Zuordnung zwischen dem Kommissionierbehälter und den Artikeln gemäß Kommissionierauftrag rechnergesteuert, und zu diesem Zweck weisen die Kommissionierbehälter auch optisch oder magnetisch erkennbare Markierungen auf, um diese Zuordnung in der richtigen Weise sicherzustellen. Die Kommissionierbehälter werden auf einem Querförderer transportiert, der etwas tiefer als das an den Speicherfächern vorbeiführende Förderband angeordnet ist, so daß letzteres die Artikel gemäß dem jeweiligen Kommissionierauftrag in die am Querförderer vorbeilaufenden Kommissionierbehälter abwerfen kann.

Diese bekannten Kommissionieranlagen haben sich vor allem in jenen Fällen bewährt, in denen eine große Vielzahl von hinsichtlich ihrer Abmessungen eher kleineren Artikeln zu manipulieren ist, in denen ein Kommissionierauftrag problemlos mit einem Kommissionierbehälter erledigt werden kann, in denen pro Kommissionierauftrag relativ wenig Platz auf dem Förderband benötigt wird, so daß die einzelnen Kommissionieraufträge hintereinander bearbeitet und zu Artikel"haufen" auf dem Förderband führen können, und in denen auch die Abfertigung der unter Zuhilfenahme der Kommissionierbehälter kommissionierten Artikel nacheinander von ein und derselben Stelle aus bewerkstelligt werden kann.

Diese bekannten Kommissionieranlagen sind jedoch dann nicht als günstig anzusehen, wenn die zu kommissionierenden Artikel eher größere Abmessungen aufweisen, dabei nicht in einer allzu hohen Vielzahl von verschiedenen Arten vorliegen, hingegen pro Artikelart möglicherweise verhältnismäßig hohe Durchsätze gegeben sind. Dies ist beispielsweise bei Tabakwaren, wie insbesondere Zigarettenstangen, der Fall. In derartigen Fällen von Kommissionierungen haben sich die bekannten Kommissionieranlagen als wenig flexibel und nicht ausreichend schnell erwiesen.

In der DE 39 15 139 A1 sind ein Verfahren und eine Anlage zum Umordnen von Gegenständen auf Paletten beschrieben, wobei Gegenstände einer bestimmten Sorte von einer Palette zu Gruppen von Gegenständen unterschiedlicher Sorten auf eine andere Palette umgesetzt werden, und wobei mehrere Speicher zwischen Depalettierungsstationen und vier Gruppenbildungsstationen angeordnet sind. Die Gegenstände werden in den Gruppenbildungsstationen "verkaufsgerecht" zusammengestellt. Auf der Abgabeseite der Speicher befindet sich unmittelbar im Anschluß an ein im Speicher angeordnetes Förderband ein auf und ab schwenkbares Förderband, welches die Gegenstände wahlweise auf vier übereinander angeordnete Förderbänder aufteilt, die in der Folge die Gegenstände zu den Gruppenbildungsstationen leiten, wobei Weichen vorgesehen sind, um die jeweiligen Förderbänder der Speicher zu einem Strang zu vereinigen, der dann vor den Gruppenbildungsstationen wieder über Weichen vereinzelt wird.

Aus der US 4 527 937 A ist weiters ein automatisches Speicher- und Verteilsystem bekannt, bei dem ein Speicherbereich mit Durchlaufspeichereinheiten vorgesehen ist, die ihre Artikel über eine Freigabeinrichtung einem Hauptförderer oder einem von mehreren Förderern übereinander zuführen; wenn ein einziger Hauptförderer vorhanden ist, transportiert dieser ohne irgendwelche zusätzliche Einrichtungen die Artikel direkt zu einem Übergabeplatz; wenn mehrere Förderer übereinander angeordnet sind, so ist in der Folge zwangsläufig ein Zusammenführungssystem erforderlich, welches die Artikel aufeinanderfolgend in einer Ebene und in einer Linie, einem Förderband, das hier einen "Sammelförderer" bildet, zusammenführt. Dieses System umfaßt auch Lichtschranken, welche über eine Steuereinrichtung Förderbänder stoppen, damit gleichzeitig ankommende Artikel nicht in einem trichterförmig zusammenlaufenden Leitabschnitt bei den schräg nach unten geneigten Förderbändern miteinander kollidieren. Wenn zwei oder mehrere Ausgangsförderbänder vorgesehen sind, erfolgt die Zusammenführung der Artikel auf einem ausgewählten Förderband über eine bzw. mehrere Weiche(n).

Aufgabe der Erfindung ist nun die Schaffung einer Kommissionieranlage, mit der bei vergleichsweise groß dimensionierten Artikeln ein besonders rasches Kommissionieren und Durchlaufen bis zu einer Übergabe oder einem Verpacken ermöglicht wird, wobei überdies der Umstand genützt werden soll, daß verschiedene Artikelsorten vergleichbare Abmessungen aufweisen können, so daß ungeachtet der verhältnismäßig großen Abmessungen eine gleichartige Manipulation aller Artikel für den beschleunigten Durchlauf durch die Anlage vorgesehen werden kann. Eine derartige Situation ist beispielsweise im Fall von in Stangen verpackten Zigarettenpackungen anzutreffen, wobei die Zigarettenstangen, auch wenn sie verschiedene Zigarettensorten enthalten, durchaus vergleichbare Abmessungen (selbst wenn sie von relativ länglich bis würfelig variieren können) haben und in vergleichbarer Weise von der Lagerung bis zur Verpackung - automatisch - manipuliert werden können.

Diese Aufgabe wird durch die in Anspruch 1 angegebenen Merkmale gelöst. Vorteilhafte Ausführungsformen und Weiterbildungen sind in den Unteransprüchen angegeben.

Mit der erfindungsgemäßen Kommissionieranlage können vergleichsweise groß dimensionierte Artikel, wie Zigarettenstangen oder ähnliche Güter, die in einer nicht allzu großen Anzahl in verschiedenen Sorten vorliegen, in außerordentlich rationeller Weise kommissioniert und an Übergabeplätzen verpackt und übergeben werden. Dadurch, daß Durchlaufspeichereinheiten für jeweils eine Vielzahl von Artikeln von ein und derselben Sorte vorgesehen sind, wobei überdies - in Entsprechung zur DE 195 11 364 A1 - auch mehrere Stapelreihen nebeneinander enthalten sein können, kann dem Umstand Rechnung getragen werden, daß die Artikel relativ große Abmessungen haben und daher, bei einem entsprechenden Durchsatz, auch der benötigte Speicherplatz größer als bei bloß einem Einzel-Speicherkanal ist; weiters wird dabei erreicht, daß Nachfüllvorgänge nur im üblichen Rahmen erforderlich werden. Die kommissionierten Artikel mit besonders hohen Durchsatzzahlen, also Artikel, die oft in großen Stückzahlen angefordert werden, werden in Durchlaufspeichern mit Mehrfachauswerfern vorgesehen; hierbei ist es möglich, nicht nur eine Zigarettenstange (die unterste in einem Stapel), sondern mehrere, z.B. fünf, Zigarettenstangen nebeneinander (die untersten in mehreren, z.B. fünf, nebeneinander vorgesehenen Stapeln) auf den die Artikel sammelnden Förderer auszuschieben.

Die ausgeworfenen Artikel werden vom Sammelförderer, insbesondere einem Förderband, nach ihrer Längsausrichtung (was im Hinblick auf die Art und Größe der angegebenen Artikel, wie insbesondere Zigarettenstangen, im Hinblick auf deren Weitertransport und Zuführung zu den einzelnen Übergabeplätzen günstig sein kann) einem gemeinsamen Fördersystem zugeführt, das eine Fördertechnik enthält, gemäß der sich ein einzelner Förderer auf zwei oder mehrere Förderer aufzweigt, wozu eine entsprechende Weichentechnik eingesetzt wird. An diese Aufzweigungen oder aufgezweigten Förderer schließen schließlich die zu den gesonderten Übergabeplätzen führenden Förderzweige an, wobei diese Übergabeplätze samt Förderzweigen insbesondere seitlich des aufgezweigten Fördersystems angeordnet sind, um so zu einer insgesamt kompakten, platzsparenden Kommissionieranlage zu kommen. Im Unterschied zu den meisten bekannten Kommissionieranlagen werden somit bei der vorliegenden Kommissionieranlage die Artikel nicht in Behälter kommissioniert, die den einzelnen Kommissionieraufträgen zugeordnet sind, sondern auf das Fördersystem übergeben und entsprechend den einzelnen Kommissionieraufträgen zu den gesonderten Übergabeplätzen transportiert. An den Übergabeplätzen können die so sortiert herantransportierten Artikel derart präsentiert werden, daß sie einfach und zeitsparend in Versandgebinde verpackt werden können. Dies kann automatisch oder auch händisch, eventuell mit das Verpacken unterstützenden Vorrichtungen, wie Anschlägen etc., erfolgen.

Bei dieser Art von Kommissionierung, bei der immer bestimmte Artikel, die hintereinander sortiert transportiert werden, einem bestimmten Übergabeplatz zugeordnet werden, erfolgt die Kommissionierung zweckmäßigerweise derart, daß immer ein Kommissionierauftrag komplett erledigt wird, d.h. es werden die verschiedenen Artikelsorten (insbesondere die verschiedenen Zigarettenstangen mit verschiedenen Zigarettensorten) entsprechend einem Kommissionierauftrag ausgeworfen und einem bestimmten Übergabeplatz zugeführt; es ist aber auch durchaus möglich, mehrere Kommissionieraufträge gleichzeitig in einer ineinandergreifenden Weise, ähnlich einem "Time-sharing"-System, zu erledigen, etwa indem Artikel von ein und derselben Art, in Zuordnung zu voneinander verschiedenen Kommissionieraufträgen, hintereinander ausgeworfen und auf das Fördersystem gebracht werden, wo sie dann den zugehörigen verschiedenen Übergabeplätzen zugeführt werden, bevor Artikel einer anderen Art entsprechend den anliegenden, abzuarbeitenden Kommissionieraufträgen in entsprechender Weise ausgeworfen und zu den Übergabeplätzen gefördert werden, bis schließlich die Kommissionieraufträge komplettiert sind.

Im Hinblick auf eine günstige, energiesparende Ausbildung der Durchlaufspeicher ist es von besonderem Vorteil, wenn die Durchlaufspeichereinheiten mit von der Befüllseite zum zugehörigen Auswerfer hin abfallende Röllchenbahnen ausgebildet sind. In derartigen Röllchenbahn-Durchlaufspeichern können sich die darin gestapelten Artikel aufgrund der Schwerkraft von der Befüllseite zur Auswerferseite hin bewegen, ohne daß hierzu ein gesonderter Antrieb erforderlich wäre. Wenn dabei die Abwärtsneigung nur wenig steil und gerade ausreichend für ein Nachbewegen der Artikelstapel bemessen ist, ist an der Abgabeseite auch kein Problem damit zu gewärtigen, daß ein hoher Anteil des Gewichts der gesamten Artikelstapel in Speicher durch entsprechende Rückhalteelemente aufzunehmen wäre; im Fall von Zigarettenstangen und dgl. Artikeln hat sich ein Gefälle von ungefähr 5° als besonders günstig erwiesen. Das Gefälle kann im Bereich der Auswerfer selbst etwas steiler sein, z.B. ungefähr 15°, um so eine rasche Nachführung jeweils einer Stapelreihe zu den Auswerfern nach einem Ausschiebevorgang sicherzustellen. Um weiters in den Auswerfern immer genügend Artikel zur Verfügung zu haben und so rasch auf die jeweiligen Kommissionieraufträge reagieren zu können, hat es sich weiters auch als vorteilhaft erwiesen, wenn für die Auswerfer jeweils mehrere Artikelstapel aufnehmende Kommissionierköpfe mit zumindest die unterste Lage der Stapel freigebenden, die oberen Stapellagen jedoch zurückhaltenden Rückhalteplatten vorgesehen sind. Dabei werden beispielsweise immer mehrere Stapel nebeneinander gleichzeitig in die Auswerfer nachgeschoben, unabhängig davon, ob diese Stapel danach, etwa entsprechend der Technik gemäß DE 195 11 364 A1, seitlich zu einem Ausschiebeplatz mit einem Einzelauswerfer verschoben werden, oder ob mit Hilfe eines Mehrfachauswerfers jeweils alle untersten Artikel aller Stapel in einer Reihe nebeneinander im Auswerfer bzw. Kommissionierkopf entsprechend der Rechnersteuerung gleichzeitig ausgeworfen werden.

Um die auf den Sammelförderer abgeworfenen Artikel der Länge nach hintereinander (gegebenenfalls - sollte dies erwünscht sein - auch quer zur Förderrichtung ausgerichtet hintereinander) zu sortieren, kann die Sortierstrecke mit entsprechenden mechanischen Führungsbauteilen ausgerüstet werden. Für eine Ausrichtung der Länge nach hat es sich dabei insbesondere als vorteilhaft erwiesen, wenn die Sortierstrecke mit progressiv schneller laufenden Förderern aufgebaut ist, an deren Oberseite überdies Leiteinrichtungen für die Artikel zu deren Vereinzelung und Ausrichtung angebracht sein können. Bei einer derart ausgebildeten Sortierstrecke zieht der jeweils nachfolgende, schneller als der vorhergehende Förderer laufende Förderer die Artikel vom vorhergehenden Förderer weg, wodurch sich eine Längsausrichtung der Artikel in Förderrichtung und deren Vereinzelung ergibt, was zusätzlich durch die oberhalb dieser Förderer angeordneten Leiteinrichtungen unterstützt werden kann. In der Praxis können dabei beispielsweise zwei progressiv schneller laufende Förderer, insbesondere Förderbänder, die Sortierstrecke bilden.

Für die geordnete und verläßliche Übergabe der Artikel vom aufgezweigten Fördersystem zu den einzelnen, zum jeweils zugehörigen Übergabeplatz führenden Förderzweigen ist es ferner von Vorteil, wenn jeder quer von der zugehörigen Aufzweigung wegfördernde Förderer über einen stirnseitigen Steigförderer an das Stirnende der jeweiligen Fördersystem-Aufzweigung anschließt. Ein derartiger Steigförderer übernimmt von der jeweiligen Fördersystem-Aufzweigung die hintereinander transportierten Artikel und fördert sie leicht ansteigend zum anschließenden - horizontalen - Querförderer, auf den die Artikel, eine entsprechende Steifigkeit vorausgesetzt, wie sie bei Zigarettenstangen und dgl. Artikeln gegeben ist, vom Steigförderer-Abgabeende herunterkippen, so daß sie quer weggefördert werden können, wobei auch ihre Ausrichtung kaum verändert wird. In diesem Zusammenhang hat es sich weiters als besonders günstig erwiesen, wenn der Steigförderer mit einer im Vergleich zur Fördergeschwindigkeit des Fördersystems hohen Fördergeschwindigkeit kontinuierlich antreibbar ist. Dabei kann die Fördergeschwindigkeit der Steigförderer derart bemessen sein, daß diese die Artikel (bzw. Zigarettenstangen) auf den Querförderer hinaus"schießen", so daß die Längsausrichtung der Artikel gewahrt bleibt und diese der Breite nach auf dem Querförderer wegtransportiert werden. Der Steigförderer kann dabei z.B. bevorzugt eine Steigung von ca. 5° aufweisen. Der Steigförderer wird beispielsweise mit Hilfe eines kurzen Steigförderbandes realisiert; in ähnlicher Weise können die Förderer des Sammelförderers, der Sortierstrecke wie auch des Fördersystems und die Querförderer durch Förderbänder in an sich herkömmlicher Weise realisiert werden; selbstverständlich sind aber auch andere Fördertechniken, wie insbesondere mit angetriebenen Rollen, denkbar und möglich. Bevorzugt werden jedoch im Hinblick auf die besonders sichere Mitnahme beim Beschleunigen bzw. beim seitlichen Wegtransportieren zumindest in diesen Bereichen Förderbänder, insbesondere mit besonders griffiger, rutschfester Oberfläche, eingesetzt. Dagegen können die zu den Übergabeplätzen führenden Förderzweige wiederum einfach durch in Förderrichtung abfallende Röllchenbahnen gebildet sein, so daß sich auch hier - wie in den Durchlaufspeichereinheiten - gesonderte Antriebseinrichtungen erübrigen, wobei andererseits die Fördergeschwindigkeit durchaus ausreichend ist, um die Artikel der Breite nach hintereinander dem Übergabeplatz zuzuführen. Die Abwärtsneigung der Röllchenbahnen kann dabei beispielsweise ca. 3° bis 5° betragen.

Zur Erleichterung des Hantierens beim Verpacken ist es schließlich auch von Vorteil, wenn an den einzelnen Übergabeplätzen den Förderzweigen quer zu deren Förderrichtung verschiebbare Schieber zum insbesondere gruppenweisen Verschieben von Artikeln zu einem Rand eines Packtisches hin zugeordnet sind.

Die Erfindung wird nun nachstehend anhand von in der Zeichnung veranschaulichten bevorzugten Ausführungsbeispielen, auf die sie jedoch nicht beschränkt sein soll, noch weiter erläutert. Es zeigen:
Fig.1 schematisch in einer allgemeinen Draufsicht eine Kommissionieranlage;
Fig.2 eine schematische Seitenansicht einer Durchlaufspeichereinheit dieser Kommissionieranlage, im wesentlichen gemäß Pfeil II in Fig.1;
Fig.3 eine schematische Ansicht einer mit einem Einzelauswerfer ausgestatteten Durchlaufspeichereinheit gemäß Pfeil III in Fig.5;
Fig.4 eine entsprechende schematische Ansicht - gemäß Pfeil IV in Fig.5 - im Fall eines Mehrfachauswerfers;
Fig.5 eine schematische Draufsicht auf einen Teil des Sammelförderers samt angeschlossener Sortierstrecke, zusammen mit Durchlaufspeichereinheiten mit Mehrfachauswerfer bzw. Einzelauswerfer;
Fig.6 eine Draufsicht auf eine Weiche;
Fig.7 eine schematische Draufsicht auf den Bereich eines Übergabeplatzes; und
Fig.8 eine zugehörige Seitenansicht eines derartigen Übergabeplatzes.

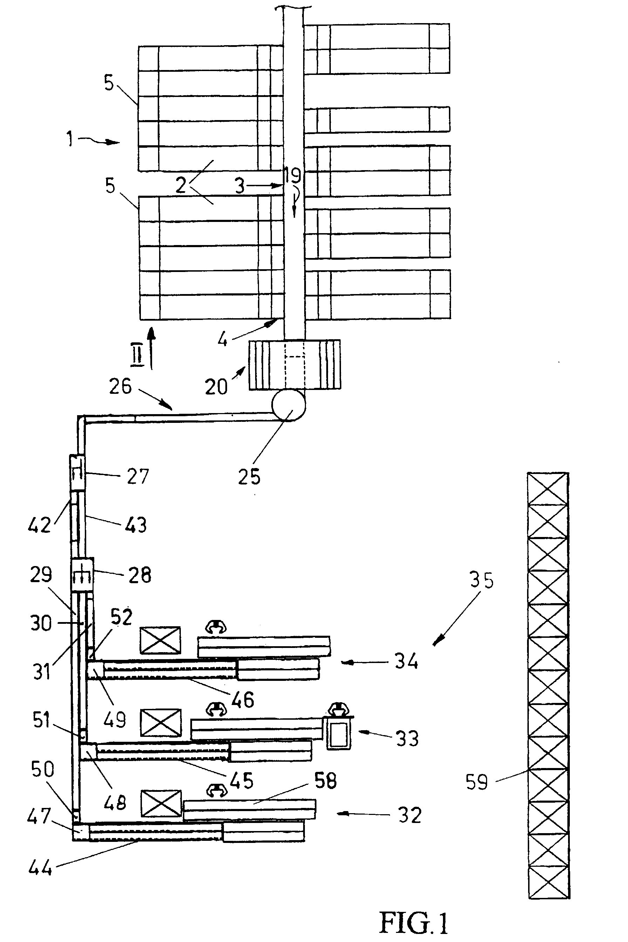

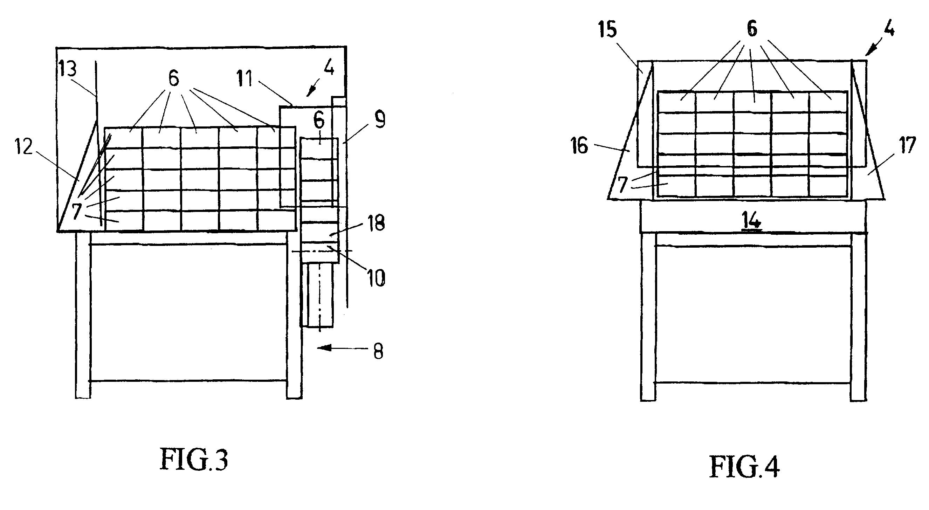

Die in Fig.1 nur ganz schematisch veranschaulichte Kommissionieranlage, gemäß einer zumindest derzeit als besonders bevorzugt angesehenen Ausführung, weist einen nur teilweise dargestellten Speicherbereich 1 mit Durchlaufspeichereinheiten 2 auf, die nebeneinander angeordnete Stapel von Artikeln, beispielsweise 5 x 5 (siehe auch Fig.3 und 4), in Reihen hintereinander enthalten und regalartig zusammengefaßt sind. Sie sind beispielsweise zu beiden Seiten eines als Sammelförderer vorgesehenen Zentralbandes 3 angeordnet, auf das die in den Speichereinheiten 2 enthaltenen Artikel rechnergesteuert mit Hilfe von Kommissionierköpfen 4 abgeschoben oder ausgeworfen werden. An der Befüllseite der Speichereinheiten 2 sind Beladetische 5 für ein Nachfüllen der Artikel in die Speichereinheiten 2 vorgesehen.

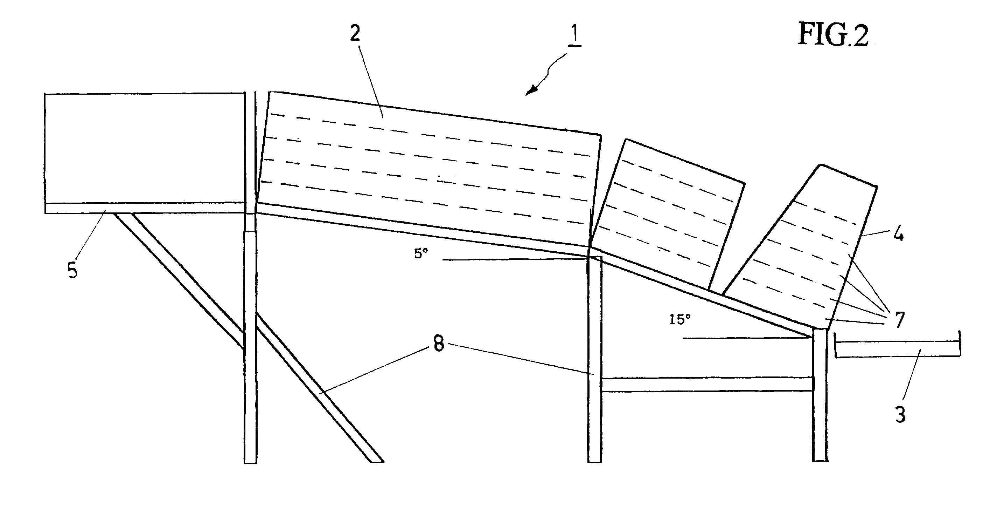

In den Durchlaufspeichereinheiten 2 laufen die in Stapeln angeordneten Artikel, z.B. Zigarettenstangen, zum Kommissionierkopf 4 hindurch, wobei die Speicher gemäß Fig.2 insbesondere mit unter z.B. 5° abfallenden Röllchenbahnen ausgebildet sind, so daß die Produktstapel aufgrund der Schwerkraft automatisch zum Auswerfer hin nachgefördert werden.

Die einzelnen Produktstapel eines 5 x 5-Durchlaufspeichers 2 bzw. des zugehörigen Kommissionierkopfes 4 gemäß Fig.3 oder 4 sind in diesen Figuren mit 6 bezeichnet, und die einzelnen Produktlagen innerhalb eines Stapels sind mit 7 angegeben.

Aus Fig.2 ist sodann ersichtlich, daß die Auswerfer-Bereiche stärker abwärts geneigt sind als die zugehörigen Produktspeicher selbst, beispielsweise unter ca. 15°. Die Baugruppen bestehend aus Beladetisch 5, Stapeldurchlaufspeicher 2 und Kommissionierkopf 4 können dabei jeweils ein gemeinsames Gestell 8 haben, wie aus Fig.2 ersichtlich ist.

In Fig.3 ist schematisch ein Beispiel für einen Stapeldurchlaufspeicher mit einer Auswerfereinheit in Form eines Einzelauswerfers 10, veranschaulicht, wobei eine Gruppe von fünf Stapeln gleichzeitig in den Kommissionierkopf 4 vorgeschoben wird, der einen eigenen Ausschieberaum 9 hat, von wo der randseitige (gemäß der Darstellung in Fig.3 am weitesten rechts befindliche) Stapel 6 von unten nach oben fortschreitend mit Hilfe des Einzelauswerfers 10 (beispielsweise in Form eines Auswerferbandes; es kann aber selbstverständlich auch ein anderer Auswerfer, wie z.B. ein pneumatischer Schieber, vorgesehen sein) ausgeworfen wird. Eine nur ganz schematisch gezeigte Rückhalteplatte (Rückhalteblech) 11 dient dazu, die oberen Lagen des in Fig.3 äußerst rechten Stapels 6 zurückzuhalten, während der unterste Artikel dieses Stapels 6 mit Hilfe des Auswerfers 10 ausgeworfen werden kann. An der anderen Seite ist in Fig.3 schematisch bei 12 ein seitliches Führungsblech für den in Fig.3 am linken Rand befindlichen Stapel 6 angebracht.

Ein derartiger Auswerfer 10, wie anhand der Fig.3 vorstehend kurz erläutert, ist aus der DE 195 11 364 A bereits an sich bekannt, so daß sich eine diesbezügliche weitere Erläuterung erübrigen kann. Es sei hier nur noch erwähnt, daß die vorderste Stapelgruppe, die in Fig.3 gezeigt ist, nachdem sie in den Kommissionierkopf 4 gelangt, seitlich Stapel um Stapel verschoben wird, und zwar mit Hilfe eines nur ganz schematisch angedeuteten, z.B. pneumatisch betätigten Querschiebers 13, um so einen Stapel 6 nach dem anderen in den Ausschieberaum 9 zu transferieren.

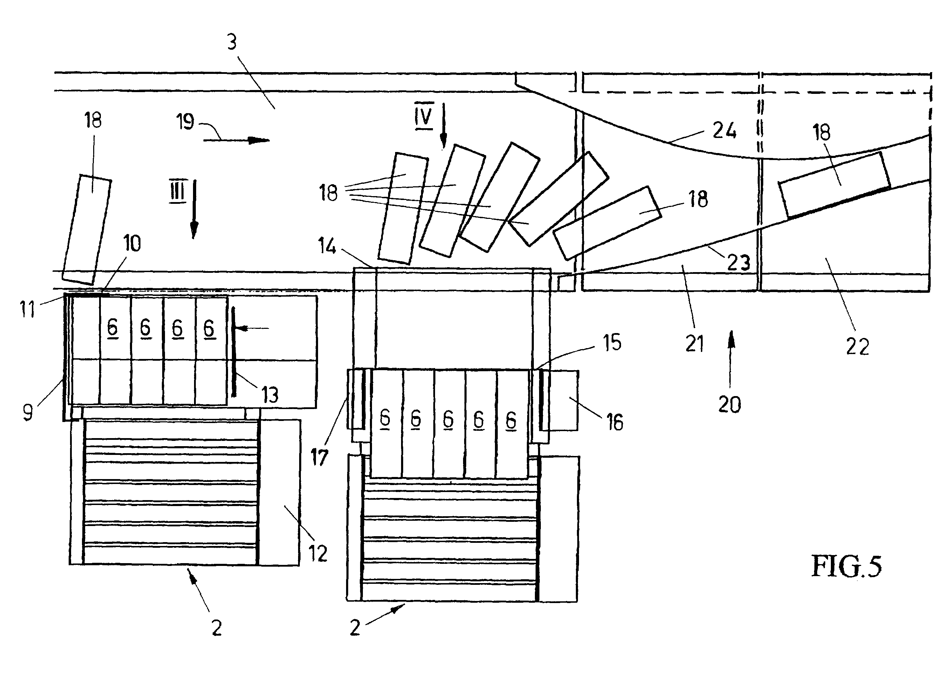

In Fig.4 ist dagegen ein Mehrfachauswerfer-Kommissionierkopf 4 schematisch dargestellt, wobei wieder die Produktstapel 6 in Gruppen, beispielsweise jeweils 5 Stapel nebeneinander, mit 5 Artikeln übereinander pro Stapel, durch den Durchlaufspeicher zum Kommissionierkopf 4 transportiert werden. Als Mehrfachauswerfer kann im einzelnen ein entsprechend breites Auswerferband 14 dienen, welches in Fig.4 nur schematisch gezeigt ist, und welches die unterste Lage 7 aller Produktstapel 6 zugleich, bei entsprechender Ansteuerung durch den Rechner, auswirft, wogegen die darüber befindlichen Lagen durch eine entsprechend breite Rückhalteplatte (Rückhalteblech) 15 zurückgehalten werden. Seitliche Führungsbleche 16, 17 dienen zur Führung der Stapel 6 beim Einlaufen in den Kommissionierkopf 4 und beim Ausschieben aus diesem, vgl. außer Fig.4 auch Fig.5.

Aus Fig.5 ist in einer schematischen Draufsicht die Anordnung von zwei nebeneinander vorgesehenen Stapeldurchlaufspeichereinheiten 2, einerseits mit dem Einzelauswerfer-Kommissionierkopf 4 gemäß Fig.3 (siehe Pfeil III in Fig.5) und andererseits mit dem Mehrfachauswerfer-Kommissionierkopf 4 gemäß Fig.4 (siehe Pfeil IV in Fig.5) ersichtlich, wobei die Situation gezeigt ist, gemäß der sowohl der Einzelauswerfer 10 als auch der Mehrfachauswerfer 14 gerade zuvor Artikel 18, wie insbesondere Zigarettenstangen, auf den durch ein Förderband (sog. Zentralband) gebildeten Sammelförderer 3 ausgeschoben haben. Die Förderrichtung des Förderbandes 3 ist mit einem Pfeil 19 veranschaulicht.

Wie sodann aus Fig.1 und insbesondere aus Fig.5 hervorgeht, übergibt das Förderband 3 die ausgeschobenen Artikel 18 an eine Sortierstrecke 20, die beispielsweise, gemäß Fig.5, mit zwei an das Förderband 3 anschließenden, progressiv schneller laufenden Bändern 21, 22 sowie darüber angeordneten Leiteinrichtungen in der Art von Leitblechen 23, 24 ausgebildet ist. Diese Sortierstrecke 20 übernimmt somit die einzelnen Artikel 18 (Zigarettenstangen) vom Sammelförderband 3 mit erhöhter Geschwindigkeit und beschleunigt sie weiter, so daß eine Art "Mitreißen" der Artikel 18 erfolgt, wodurch diese Artikel vereinzelt und der Länge nach in Förderrichtung ausgerichtet werden. Diese Ausrichtung und Sortierung wird durch die Leiteinrichtungen 23, 24 zusätzlich unterstützt.

Gemäß Fig.1 werden die Artikel 18 sodann von der Sortierstrecke 20 über einen drehenden Übergabetisch 25 an ein Fördersystem 26 übergeben, welches sich mehrfach aufzweigt, wie bei 27 und 28 in Fig.1 schematisch veranschaulicht ist. Hierfür können an sich bekannte Weichensysteme eingesetzt werden, die die Artikel 18 gemäß den Kommissionieraufträgen rechnergesteuert auf die gewünschten Aufzweigungen, z.B. 29, 30 oder 31, bringen, um so die jeweiligen Artikel 18, entsprechend den Kommissionieraufträgen, einzelnen Übergabeplätzen 32, 33, 34 einer Übergabestation 35 zuzuordnen.

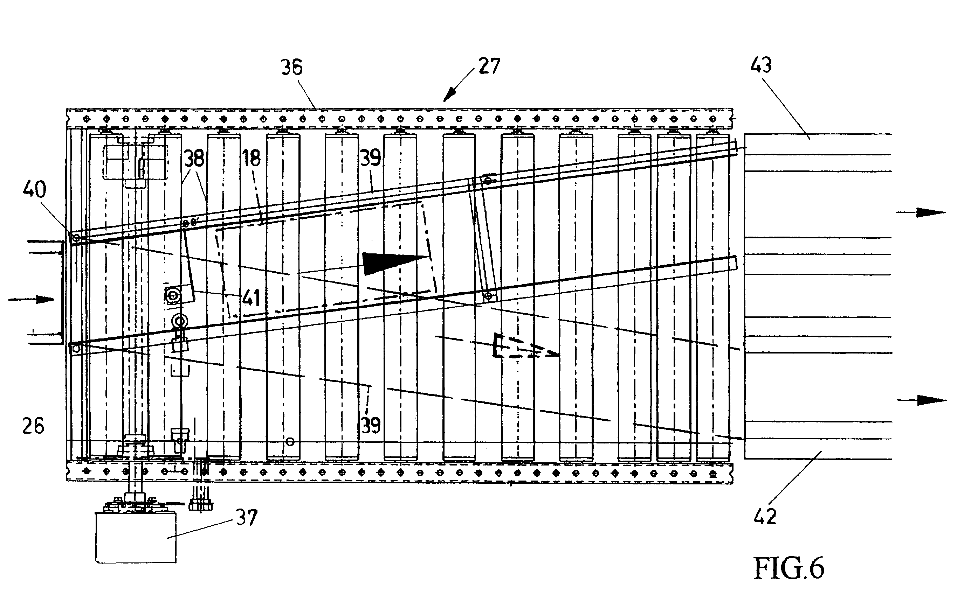

In Fig.6 ist ein Beispiel für eine Weiche 27 schematisch in Draufsicht gezeigt; wie ersichtlich ist dabei eine Rollenbahn 36 mit angetriebenen (siehe Motor 37) Rollen 38 vorgesehen, und an der Oberseite hiervon sind zueinander parallele Leitschienen 39 um Schwenkpunkte 40 mit Hilfe eines Schwenkantriebes 41 horizontal schwenkbar angeordnet, um die Artikel 18 (in Fig.6 strichpunktiert dargestellt) alternativ einem von zwei nachfolgenden Förderbändern 42, 43 (vgl. auch die gestrichelt dargestellte Position der Leitschienen 39) zuzuführen.

An das eine Band, z.B. 43, kann dann ein abfallendes oder ansteigendes Band anschließen, um so eine Aufteilung in vertikaler Richtung zu erzielen. Bei der Weicheneinheit 28 gemäß Fig.1 kann es sich dann genaugenommen um zwei übereinander angeordnete 3er-Weichen handeln, die je eine 3fach-Aufzweigung, in übereinanderliegenden Ebenen, bewerkstelligen, wobei aus Fig.1 nur die oberen Aufzweigungen 29, 30, 31 ersichtlich sind.

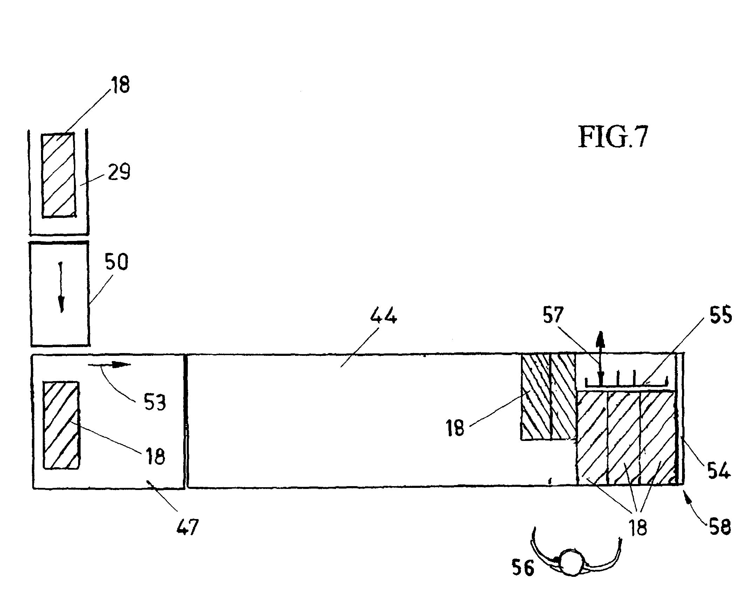

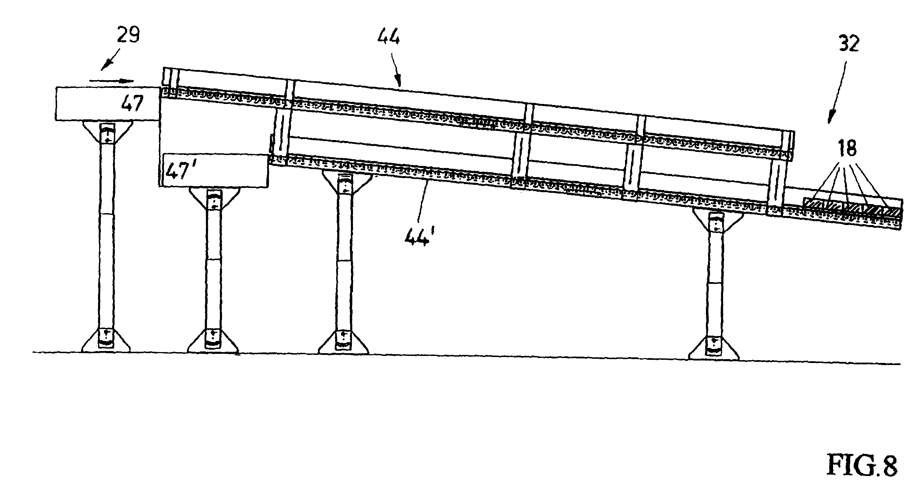

Um die jeweiligen Artikel 18 gemäß den einzelnen Kommissionieraufträgen den entsprechenden Übergabeplätzen 32, 33, 34 zuzuführen, schließen an die Fördersystem-Aufzweigungen 29, 30, 31 quer dazu verlaufende Förderzweige 44, 45, 46 an, wobei zu deren Realisierung einfach abwärts geneigte Röllchenbahnen vorgesehen sein können, vgl. auch Fig.8, aus der im übrigen auch die zuvor, bei 27 erfolgte, vertikale Auffächerung oder Aufzweigung zu entnehmen ist, siehe auch den unteren Förderzweig 44'. Im einzelnen schließen diese Förderzweige 44, 45, 46 über als Querbänder 47, 48, 49 ausgebildete Querförderer an Steigförderer in Form von kurzen Steigbändern 50, 51, 52 an, vgl. außer Fig.1 und 8 auch Fig.7, wobei diese Steigbänder 50, 51, 52 ebenso wie die Querbänder 47, 48, 49 mit vergleichsweise hoher Geschwindigkeit angetrieben werden, so daß einerseits die Steigbänder 50, 51, 52 die Artikel 18 mit wesentlicher Beschleunigung transportieren und auf das nachfolgende Querband 47, 48 oder 49 mehr oder weniger hinaus"schießen", worauf das ebenfalls rasch umlaufende Querband 47, 48, 49 die Artikel 18 in der gegebenen (Längs-)Ausrichtung übernehmen kann und sie - nunmehr der Breite nach - der jeweiligen Röllchenbahn 44 bzw. 45 bzw. 46 zuführt, vgl. auch Pfeil 53 in Fig.7.

Am Ende der jeweiligen Röllchenbahn 44, 45, 46 können gemäß Fig.7 die Artikel 18 gegen einen Anschlag 54 stoßen, und eine Gruppe von Artikeln 18 wird im Ausführungsbeispiel gemäß Fig.7 mit Hilfe eines quer bewegbar angeordneten Schiebers 55, von einem nicht näher veranschaulichten Sensor oder Endschalter (Mikroschalter) aktiviert, zu einer schematisch angedeuteten Bedienungsperson 56 hin verschoben, s. Pfeil 57, um so das Manipulieren der Artikel 18 beim Verpacken zu erleichtern. Die Anordnung kann dabei so wie in Fig.7 veranschaulicht sein, wobei das Ende der Röllchenbahn 44 eine Packtisch-artige Zone 58 bildet; die Anordnung kann jedoch auch so wie schematisch in Fig.1 gezeigt sein, wo gesonderte Packtische dem Bedienungspersonal zur Verfügung stehen.

Aus Fig.1 ist sodann noch ein Versandbereich 59 ersichtlich, von wo die versandfertigen Gebinde abtransportiert werden.

Die Rechnersteuerung für die beschriebene Kommissionieranlage kann in an sich herkömmlicher Art ausgelegt sein, wobei die Artikel 18 gemäß den eingelangten Kommissionieraufträgen von den Durchlaufspeichern 2 auf das Sammelförderband 3 kommissioniert und sodann den gesonderten Übergabeplätzen 32, 33, 34 zugeführt werden. Zu berücksichtigen ist dabei, daß die entsprechenden Aufzweigungen 29, 30, 31 über die Weichen 27, 28 angesteuert werden, was unter Berücksichtigung der jeweiligen Transportzeit für die Artikel 18 vom Kommissionieren auf das Zentralband 3 weg bis zum Erreichen der Aufzweigungen, aufgrund der Geschwindigkeit der Förderbänder, ohne weiteres möglich ist. Die Kommissionieraufträge können auch von der Übergabestation 35 aus gestartet werden, und sie werden vorzugsweise von einem Kundenrechner an die Kommissionieranlage übermittelt.

Die Versandgebinde, in denen die Artikel 18 in der Übergabestation 35 verpackt werden, können eigene Kunststoff-, Metall- oder Kartonbehälter sein, jedoch werden zweckmäßigerweise bevorzugt die leeren Originalkartons verwendet, die an den Beladetischen 5 im Speicherbereich 1 anfallen, und die zur Übergabestation 35 transportiert werden, nachdem sie geleert wurden.

Im Rahmen der vorliegenden Kommissionieranlage ist es selbstverständlich auch möglich, in mehreren Etagen oder Ebenen übereinander Sammel- oder Zentralbänder 3 anzuordnen, denen von entsprechend übereinander angeordneten Speichereinheiten oder Stapeldurchlaufspeichern 2 mit zugehörigen Auswerfereinheiten (Kommissionierköpfe 4) die Artikel 18 entsprechend den Kommissionieraufträgen zugeführt werden. In der Folge kann das Fördersystem 26 auch von vornherein in mehreren Ebenen übereinander betrieben werden, und es können die vertikalen Aufzweigungen, wie bei 27, entfallen. Die Durchlaufspeicher 2 bzw. Kommissionierköpfe 4 können sodann außer wie dargestellt rechtwinkelig zum Zentralband 3, wie dies bevorzugt wird, auch unter einem von 90° abweichenden spitzen oder stumpfen Winkel zum Zentralband 3 stehen. Die Durchlaufspeicher 2 können ferner derart ausgelegt sein, daß die Produktstapel aus ihren Originalverpackungskartons (aus der Fabrik) direkt in die Durchlaufspeicher 2 nachgefüllt werden können, ohne daß jedes einzelne Produkt erfaßt werden muß.

Im Betrieb werden entsprechend einem Kommissionierauftrag, der von der Übergabestation 35 abgerufen wird, beispielsweise fünf Zigarettenstangen 18 einer ersten Sorte (an einem Mehrfachauswerfer-Kommissionierkopf, Fig.5, rechte Einheit), weiters z.B. eine Zigarettenstange 18 einer zweiten Sorte (Einzelauswerfer-Kommissionierkopf auf der linken Seite in Fig.5) sowie weitere Zigarettenstangen weiterer Sorten auf das Förderband 3 ausgeworfen. Dabei können Durchlaufspeichereinheiten 2 zu beiden Seiten des Förderbandes 3 angeordnet sein, und zwar auch mit unterschiedlichen Breiten entsprechend unterschiedlichen Artikeln oder Artikelsorten mit unterschiedlichen Durchsatzmengen, wie dies schematisch in Fig.1 auf der Seite rechts vom Förderband 3 angedeutet ist.

Die so auf das Förderband 3 kommissionierten Artikel 18, die zu einem Kommissionierauftrag gehören, werden in der Sortierstrecke 20 von den immer schneller laufenden Förderbändern 21, 22 mit entsprechend griffiger Oberfläche erfaßt und beschleunigt und dabei auseinandergezogen sowie der Länge nach ausgerichtet. Von der Sortierstrecke 20 werden die Artikel 18 sodann an das Fördersystem 26 übergeben, wo die Artikel eines Kommissionierauftrages auf eine vorgegebene Aufzweigung, z.B. 29, gesteuert werden, wo sie auf das rechtwinkelig abzweigende Querband, z.B. 47, zufahren, auf dem entsprechenden Steigband, z.B. 50, beschleunigt werden, und sodann auf dem Querband, z.B. 47, unter einem Winkel von 90° seitlich weg beschleunigt werden; danach rollen die Artikel 18 die jeweilige Röllchenbahn, z.B. 44, nach unten, vgl. auch die in Fig.8 untere Röllchenbahn 44', an deren unterem Ende fünf Artikel 18 veranschaulicht sind. Es sei erwähnt, daß auf einer Packtischebene, vgl. auch Fig.1, je nach Produktabmessungen beispielsweise bis zu vierzig Produkte, bei schmalen Produkten auch mehr, nebeneinander bereit gelegt werden können.

Aus der vorstehenden Beschreibung ergibt sich auch, daß je Übergabeplatz, z.B. 32 (siehe auch Fig.8), in mehreren, z.B. zwei, Ebenen die kommissionierten Artikel 18 zugeführt werden können, um so, während die Artikel 18 eines Kommissionierauftrages verpackt werden, bereits die Artikel 18 eines nächsten Kommissionierauftrages sammeln und bereitstellen zu können.

## Patentansprüche

1. Kommissionieranlage zur automatischen rechnergesteuerten Zuführung von länglichen Artikeln (18), z.B. Tabakwaren, von einem Speicherbereich (1) zu einer Übergabestation (35) gemäß Kommissionieraufträgen und ohne Verwendung von Kommissionierbehältern, wobei
- der Speicherbereich (1) für jede Art der zu kommissionierenden Artikel (18) zumindest eine Durchlaufspeichereinheit (2) mit einem dieser zugeordneten Auswerfer (10;14) aufweist, wobei die Artikel der Länge nach in Längsrichtung der Durchlaufspeichereinheit (2) ausgerichtet nebeneinander in Stapeln (6) angeordnet sind und die Auswerfer (10;14) an zumindest einer Längsseite zumindest eines Sammelförderers (3) angeordnet sind, auf den direkt sie die Artikel (18) auswerfen, so daß die Artikel (18) mit ihrer Längsachse quer zur Förderrichtung (19) des Sammelförderers (3) zu liegen kommen, dadurch gekennzeichnet, daß
- zumindest eine Durchlaufspeichereinheit (2) mit Einzelauswerfer (10) und, für Artikel mit hohem Durchsatz, zumindest eine Durchlaufspeichereinheit (2) mit einem Mehrfachauswerfer (14) vorgesehen sind,
- an den Sammelförderer (3) über eine die Artikel vereinzelnde und der Länge nach ausrichtende Sortierstrecke (20) ein Fördersystem (26) mit Aufzweigungen (29,30,31) und zugehörigen Weichen (27,28) anschließt, und
- an die Aufzweigungen (29,30,31) gesonderte Förderzweige (44,45,46) über quer wegfördernde Förderer (47,48,49) anschließen, und jeweils ein gesonderter Förderzweig (44,45,46) zu einem gesonderten Übergabeplatz (32,33,34) in der Übergabestation (35), für die Verpackung der Artikel, führt.

2. Kommissionieranlage nach Anspruch 1, dadurch gekennzeichnet, daß der Sammelförderer (3) durch ein Förderband gebildet ist.

3. Kommissionieranlage nach Anspruch 1 oder 2, dadurch gekennzeichnet, daß die Durchlaufspeichereinheiten (2) mit von der Befüllseite zum zugehörigen Auswerfer hin abfallenden Röllchenbahnen ausgebildet sind.

4. Kommissionieranlage nach einem der Ansprüche 1 bis 3, dadurch gekennzeichnet, daß für die Auswerfer jeweils mehrere Artikelstapel (6) aufnehmende Kommissionierköpfe (4) mit zumindest die unterste Lage (7) der Stapel (6) freigebenden, die oberen Stapellagen (7) jedoch zurückhaltenden Rückhalteplatten (11;15) vorgesehen sind.

5. Kommissionieranlage nach einem der Ansprüche 1 bis 3, dadurch gekennzeichnet, daß zur Vereinzelung und Ausrichtung der Artikel (18) die Sortierstrecke (20) mit progressiv schneller laufenden Förderern (21,22) aufgebaut ist, an deren Oberseite Leiteinrichtungen (23,24) angebracht sind.

6. Kommissionieranlage nach einem der Ansprüche 1 bis 5, dadurch gekennzeichnet, daß jeder quer von der zugehörigen Aufzweigung (29,30,31) wegfördernde Förderer (47,48,49) über einen stirnseitigen Steigförderer (50,51,52) an das Stirnende der jeweiligen Fördersystem-Aufzweigung (29,30,31) anschließt.

7. Kommissionieranlage nach Anspruch 6, dadurch gekennzeichnet, daß der Steigförderer (50,51,52) mit einer im Vergleich zur Fördergeschwindigkeit des Fördersystems (26) hohen Fördergeschwindigkeit, z.B. kontinuierlich, antreibbar ist.

8. Kommissionieranlage nach Anspruch 6 oder 7, dadurch gekennzeichnet, daß der Steigförderer (50,51,52) eine Steigung von ca. 5° aufweist.

9. Kommissionieranlage nach einem der Ansprüche 1 bis 8, dadurch gekennzeichnet, daß jeder von der zugehörigen Aufzweigung (29,30,31) quer wegfördernde Förderer (47,48,49) durch ein Querband gebildet ist.

10. Kommissionieranlage nach einem der Ansprüche 1 bis 9, dadurch gekennzeichnet, daß die zu den Übergabeplätzen (32,33,34) führenden Förderzweige (44,45,46) durch in Förderrichtung abfallende Röllchenbahnen gebildet sind.

11. Kommissionieranlage nach einem der Ansprüche 1 bis 10, dadurch gekennzeichnet, daß an den einzelnen Übergabeplätzen (32,33,34) den Förderzweigen (44,45,46) quer zu deren Förderrichtung verschiebbare Schieber (55) zum, z.B. gruppenweisen, Verschieben von Artikeln (18) zu einem Rand eines Packtisches (58) hin zugeordnet sind.

12. Kommissionieranlage nach einem der Ansprüche 1 bis 11, dadurch gekennzeichnet, daß die Durchlaufspeicher (2) Stapeldurchlaufspeicher sind.

## Claims

1. A commissioning installation for automatically supplying elongate items (18), e.g. tobacco products, computer-controlled from a storage region (1) to a transfer station (35) in accordance with commissioning orders and without using commissioning containers, wherein
- the storage region (1) for each type of item (18) to be commissioned has at least one throughput storage unit (2) with an associated ejector (10, 14), the items being length-wise aligned adjacently arranged in stacks (6) in the longitudinal direction of the throughput storage unit (2), and the ejectors (10; 14) being arranged on at least one longitudinal side of at least one collecting conveyor (3) onto which they directly eject the items (18) so that the items (18) come to lie with their longitudinal axis transversely to the conveying direction (19) of the collecting conveyor (3), characterised in that
- at least one throughput storage unit (2) comprising a single-item ejector (10) and, for items with a high throughput rate, at least one throughput storage unit (2) comprising a multiple item ejector (14) are provided,
- a conveying system (26) comprising branchings (29, 30, 31) and associated shunts (27, 28) follows upon the collecting conveyor (3), via a sorting path (20) providing the items individually and longitudinally aligned, and
- separate conveying branches (44, 45, 46) follow upon the branchings (29, 30, 31), via conveyors (47, 48, 49) conveying transversely away, each respective separate conveying branch (44, 45, 46) leading to a separate transfer site (32, 33, 34) in the transfer station (35) for packing the items.

2. A commissioning installation according to claim 1, characterised in that the collecting conveyor (3) is formed by a conveyor belt.

3. A commissioning installation according to claim 1 or 2, characterised in that the throughput storage units (2) are designed with roller paths downwardly inclined from the filling side towards the associated ejector.

4. A commissioning installation according to any one of claims 1 to 3, characterised in that commissioning heads (4) each receiving several item stacks (6) comprising retention plates (11, 15) releasing at least the lowermost layer (7) of the stacks (6) yet holding back the upper stack layers (7) are provided for the ejectors.

5. A commissioning installation according to any one of claims 1 to 3, characterised in that to provide the items (18) individually and in alignment, the sorting path (20) is set up with progressively faster moving conveyors (21, 22) at whose upper sides directing devices (23, 24) are attached.

6. A commissioning installation according to any one of claims 1 to 5, characterised in that each conveyor (47, 48, 49) conveying transversely away from the associated branching (29, 30, 31) follows at the front end of the respective conveying system branching (29, 30, 31) via a front-side ascending conveyor (50, 51, 52).

7. A commissioning installation according to claim 6, characterised in that the ascending conveyor (50, 51, 52) is, e.g. continuously, drivable at a conveying speed which is high in comparison to the conveying speed of the conveying system (26).

8. A commissioning installation according to claim 6 or 7, characterised in that the ascending conveyor (50, 51, 52) has an ascent of approximately 5°.

9. A commissioning installation according to any one of claims 1 to 8, characterised in that each conveyor (47, 48, 49) conveying transversely away from the associated branching (29, 30, 31) is formed by a transverse belt.

10. A commissioning installation according to any one of claims 1 to 9, characterised in that the conveying branches (44, 45, 46) leading to the transfer sites (32, 33, 34) are formed by roller paths downwardly inclined in the conveying direction.

11. A commissioning installation according to any one of claims 1 to 10, characterised in that at the individual transfer sites (32, 33, 34) the conveying branches (44, 45, 46) have associated slides (55) slidable transversely to the conveying direction of the former for shifting items (18), e.g. in groups, towards one edge of a packing table (58).

12. A commissioning installation according to any one of claims 1 to 11, characterised in that the throughput storage devices (2) are item stack throughput storage devices.

## Revendications

1. Installation de préparation de commandes pour l'amenée automatique, commandée par calculateur, d'articles allongés (18), par exemple des articles de tabac, depuis une zone d'accumulation (1) jusqu'à un poste de transfert (35) conformément à des ordres de commande et sans l'utilisation de récipients de préparation de commandes, dans laquelle
- la zone d'accumulation (1) pour chaque type des articles (18) devant être préparés comporte au moins une unité d'accumulation à circulation (2) comportant un éjecteur (10;14) associé à cette unité, les articles étant disposés, dans le sens de leur longueur, côte-à-côte sous la forme d'empilages (6), en étant orientés dans la direction longitudinale de l'unité d'accumulation à circulation (2), tandis que les éjecteurs (10;14) sont disposés sur au moins un côté longitudinal d'au moins un convoyeur de collecte (3), sur lequel les éjecteurs éjectent directement les articles (18) de sorte que les articles (18) viennent se placer avec leur axe longitudinal disposé transversalement par rapport à la direction de convoyage (19) du convoyeur de collecte (3), caractérisée en ce que
- au moins une unité d'accumulation à circulation (2) à éjecteur individuel (10) et, pour des articles à grand débit, au moins une unité d'accumulation à circulation (2) comportant un éjecteur multiple (14) sont prévues,
- un système de convoyage (26) comportant des embranchements (29,30,31) et des aiguillages associés (27,28) se raccorde au convoyeur de collecte (3) au moyen d'une section de tri (20) individualisant les articles et les orientant en direction de leur longueur, et
- des branches de convoyage (44,45,46) séparées se raccordent aux embranchements (29,30,32) par l'intermédiaire de convoyeurs (47,48,49) qui réalisent un convoyage transversal d'évacuation, et respectivement une branche de convoyage (44, 45, 46) séparée de conduit à un emplacement de transfert (32,33,34) particulier situé dans le poste de transfert (35), pour l'emballage des articles.

2. Installation de préparation de commandes selon la revendication 1, caractérisée en ce que le convoyeur de collecte (3) est formée par une bande convoyeuse.

3. Installation de préparation de commandes selon la revendication 1 ou 2, caractérisée en ce que les unités d'accumulation à circulation (2) sont réalisées avec des transporteurs à petits rouleaux, qui s'inclinent depuis le côté de chargement en direction de l'éjecteur associé.

4. Installation de préparation de commandes selon l'une des revendications 1 à 3, caractérisée en ce que des têtes de préparation de commandes (4), qui reçoivent respectivement plusieurs empilages d'articles (6) et comportent des plaques de retenue (11,15) qui libèrent au moins la couche la plus basse (7) des empilages (6), mais qui retiennent les couches supérieures (7) des empilages, sont prévues pour les éjecteurs.

5. Installation de préparation de commandes selon l'une des revendications 1 à 3, caractérisée en ce que pour individualiser et orienter les articles (18), la section de tri. (20) est réalisée avec des convoyeurs (21,22) qui se déplacent de plus en plus rapidement et sur la face supérieure desquels sont disposés des dispositifs de guidage (23,24).

6. Installation de préparation de commandes selon l'une des revendications 1 à 5, caractérisée en ce que chaque convoyeur (47,48,49), qui réalise une évacuation transversale à partir de l'embranchement associé (29,30,31), se raccorde par l'intermédiaire d'un convoyeur frontal ascendant (50,51,52), à l'extrémité frontale de l'embranchement respectif (29,30,31) du système de convoyage.

7. Installation de préparation de commandes selon la revendication 6, caractérisée en ce que le convoyeur ascendant (50,51,52) peut être entraîné, par exemple continûment, avec une vitesse de convoyage élevée par rapport à la vitesse de convoyage du système de convoyage (26).

8. Installation de préparation de commandes selon les revendications 6 ou 7, caractérisée en ce que le convoyeur ascendant (50,51,52) possède une pente montante d'environ 5°.

9. Installation de préparation de commandes selon l'une des revendications 1 à 8, caractérisée en ce que chaque convoyeur (47,48,49), qui réalise une évacuation transversale à partir de l'embranchement associé (29,30,31), est formé par une bande transversale.

10. Installation de préparation de commandes selon l'une des revendications 1 à 9, caractérisée en ce que les branches de convoyage (44,45,46), qui aboutissent aux emplacements de transfert (32,33,34), sont formées par des transporteurs à petits rouleaux qui descendent dans la direction de convoyage.

11. Installation de préparation de commandes selon l'une des revendications 1 à 10, caractérisée en ce qu'au niveau des différents emplacements de transfert (32, 33,34), aux branches de convoyage (44,45,46) sont associés des poussoirs (55) qui sont déplaçables transversalement par rapport à la direction de convoyage de ces branches de convoyage, pour le déplacement d'articles (18), par exemple par groupes, en direction d'un bord d'une table d'emballage (58).

12. Installation de préparation de commandes selon l'une des revendications 1 à 11, caractérisée en ce que les unités d'accumulation à circulation (2) sont des accumulateurs à circulation d'empilages.
